(19) Europäisches Patentamt
European Patent Office
Office européen des brevets

(11) Publication number: **0 064 577 B1**

(12) **EUROPEAN PATENT SPECIFICATION**

(45) Date of publication of patent specification: **10.07.85**

(51) Int. Cl.[4]: **C 01 B 33/28,** B 01 J 29/28

(21) Application number: **81302006.2**

(22) Date of filing: **07.05.81**

(54) **Crystalline zeolitic material, synthesis and use thereof.**

(43) Date of publication of application:
**17.11.82 Bulletin 82/46**

(45) Publication of the grant of the patent:
**10.07.85 Bulletin 85/28**

(84) Designated Contracting States:
**BE DE FR GB IT NL**

(56) References cited:
**EP-A-0 014 059**
**DE-A-2 836 076**
**US-A-3 947 482**
**US-A-4 061 724**

(73) Proprietor: **MOBIL OIL CORPORATION**
**150 East 42nd Street**
**New York New York 10017 (US)**

(72) Inventor: **Dwyer, Francis Gerard**
**1128 Talleyrand Road**
**West Chester Pennsylvania (US)**
Inventor: **Jenkins, Edwin Earl**
**RD 1 Woodstown**
**New Jersey (US)**

(74) Representative: **Cooper, John Anthony et al**
**CARPMAELS & RANSFORD 43 Bloomsbury Square**
**London WC1A 2RA (GB)**

EP 0 064 577 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a new crystalline zeolite material, to a method for synthesising it, and to its use, inter alia as organic conversion catalyst.

Many crystalline zeolites are known, in most cases as aluminosilicates. Some occur (at least so far) only in nature, for instance paulingite and merlinoite; some occur only as a result of synthesis, for instance zeolites A and ZSM-5; and some occur in both natural and synthetic forms, for instance mordenite, synthetic counterpart of which is known as Zeolon, and faujasite, synthetic counterparts of which are known as zeolites X and Y. Counterparts are of course demonstrated as such by correspondence of their X-ray diffraction data, the indicia by means of which the individuality of a zeolite is established. Such data are a manifestation of the particular geometry of the three-dimensional lattice, formed of $SiO_4$ and in most cases $AlO_4$ tetrahedra crosslinked by the sharing of oxygen atoms and including sufficient cationic complement to balance the resulting negative charge on any $AlO_4$ tetrahedra, of which a zeolite may consist.

The chemical formula of an aluminosilicate zeolite is thus

$$M_{x/n}:(AlO_2)_x:(SiO_2)_y$$

where M is a cation of valence n and x and y are the number of aluminum and silicon atoms, respectively, in the unit cell (the geometric unit which repeats throughout the extent of the lattice). This expression is however frequently transmuted into the "mole ratio of oxides" form,

$$M_{2/n}O:Al_2O_3:{}_{2y/x}SiO_2$$

which is of course empirically ascertainable and thus the only formula which can be ascribed to a zeolite when its unit cell contents are unknown. Since the only significant quantity in such a formula is the term 2y/x, and since this term (which is almost invariably a range) can usually be satisfied by many zeolites of widely differing lattice geometry, chemical formula is not uniquely restrictive in establishing the identity of a zeolite. Furthermore, such a formula frequently expresses artefact when empirically derived, the cationic-valence/aluminum-atoms ratio deviating from unity, and it fails to provide for zeolites whose lattice structure can be brought into existence from reaction mixtures from which alumina is excluded. Moreover, both the unit cell formula and the "mole ratio of oxides" formula imply that the geometrical identity which persists between succeeding unit cells is accompanied by their compositional identity.

We have now discovered a zeolite having a lattice structure previously unknown, as evidenced by its X-ray diffraction data, which we call ZSM-39.

According to the present invention a crystalline zeolitic material, ZSM-39, has a lattice constituted by $SiO_4$ and possibly $AlO_4$ tetrahedra crosslinked by the sharing of oxygen atoms and characterized by the following interplanar spacings:

| Interplanar spacing D (A) | Relative intensity |
|---|---|
| 11.2±0.2 | W |
| 6.8±0.15 | M |
| 5.8±0.1 | VS |
| 5.6±0.1 | VS |
| 4.8±0.1 | M |
| 4.4±0.1 | M |
| 3.95±0.08 | M—S |
| 3.7±0.08 | VS |
| 3.4±0.07 | M—S |
| 3.3±0.07 | VS |
| 3.2±0.07 | W |
| 3.1±0.06 | W |
| 3.0±0.06 | W |
| 2.3±0.05 | W |

These values were determined by standard techniques. The radiation was the K-alpha doublet of copper, and a scintillation counter spectrometer with a strip chart pen recorder was used. The peak heights, I, and the positions as a function of 2 times theta, where theta is the Bragg angle, were read from the spectrometer chart. From these, the relative intensities, 100I/Io, where Io is the intensity of the strongest line or peak, and d (obs.), the interplanar spacing in A (1Å=0.1 nm), corresponding to the recorded lines, were estimated. The intensity in the table above is expressed as follows:

W=weak, M=medium, M—S=medium to strong, S=strong and VS=very strong.

Zeolite ZSM-39 often satisfies, in terms of moles of anhydrous oxides per 100 moles of silica, the following chemical formula:

$$(0\text{—}2.5)M_2/nO:(0\text{—}2.5)Al_2O_3:(100)SiO_2$$

wherein M is at least one cation having a valence n.

In the as-synthesized form, the zeolite usually has a formula, after dehydration, in terms of moles of oxides per 100 moles of silica, as follows:

$$(0\text{—}2.5)R_2O:(0\text{—}2.5)M_{2/n}O:(0\text{—}2.5)Al_2O_3:(100)SiO_2$$

wherein M is an alkali or alkaline earth metal and $R_2O$ is the oxide form of an organic compound of Group VB element of the Periodic Chart of the Elements (Fisher Scientific Company, Cat. No. 5-702-10, 1978), preferably nitrogen or phosphorus, containing at least one alkyl or aryl group having between 1 and 7 carbon atoms, preferably between 2 and 5 carbon atoms, preferably containing at least one ethyl group and still more preferably $R_2O$ is a quaternary ammonium compound.

Zeolite ZSM-39 may have samll amounts of Al, Fe and/or Cr in positions of tetrahedral substitution within the silica lattice. To this extent, the latter possesses a negative charge, one excess electron for each atom substitution, which is balanced by cations. These cations may be replaced at least in part by other ions using conventional ion exchange techniques. Due to pore blockage, in some cases, by the $R_2O$ species it may be necessary to calcine the zeolite prior to ion exchange. Ions introduced to replace the original alkali, alkaline earth and/or organic cations may be any that are desired so long as they can pass through the channels within the zeolites. Especially desired replacing ions are those of hydrogen, ammonium and metals of Groups I through VIII of the Periodic Chart. Among the metals those particularly preferred are rare earth metals, manganese, zinc and those of Group VIII of the Periodic Chart.

Differing cationic forms of the zeolite reveal substantially the same X-ray diffraction pattern with minor shifts in interplanar spacing and variation of relative intensity. Other minor variations can occur depending on the silica to alumina mole ratio of the particular sample as well as its thermal history.

Zeolite ZSM-39 can be used as catalyst or adsorbent either in the alkali metal form, e.g. the sodium form; the ammonium form; the hydrogen form or another univalent or multivalent cationic form. When used as a catalyst the zeolite will be subjected to thermal treatment to remove part or all of the organic constituent.

The zeolite can also be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition to the extent Al is in the structure, impregnated therein or intimately physically admixed therewith. Such component can be impregnated in or on to it such as for example, by, in the case of platinum, treating the zeolite with a solution containing a platinum metal-containing ion. Thus, suitable platinum compounds include chloroplatinic acid, platinous chloride and various compounds containing the platinum amine complex.

The above zeolite especially in its metal, hydrogen, ammonium, alkylammonium and arylammonium forms can be beneficially converted to another form by thermal treatment. This thermal treatment is generally performed by heating one of these forms at a temperature of at least 371°C (700°F) for at least 1 minute and generally not greater than 20 hours. While subatmospheric pressure can be employed for the thermal treatment, atmospheric pressure is desired for reasons of convenience. The thermal treatment can be performed at a temperature up to about 927°C (1700°F). The thermally treated product is particularly useful in the catalysis of certain hydrocarbon conversion reactions.

The new zeolite when employed either as an adsorbent or as a catalyst in one of the aforementioned processes should be dehydrated, at least partially. This can be done by heating to a temperature in the range of 204°C (400°F) to 593°C (1100°F) in an atmosphere, such as air, nitrogen, etc. and at atmospheric, subatmospheric or superatmospheric pressures for between 1 and 48 hours. Dehydration can also be performed at room temperature merely by placing ZSM-39 in a vacuum, but a longer time is required to obtain a sufficient amount of dehydration.

The new zeolite can be prepared from a reaction mixture containing a source of silica (an oxide of silicon); $R_2O$; an alkali metal oxide, e.g. sodium; water; and optionally alumina, and having a composition, in terms of mole ratios of oxides, falling within the following ranges:

| Reactants | Broad | Preferred |
|---|---|---|
| $R_2O/SiO_2$ | .01—100 | .05—10 |
| $M_2/nO/SiO_2$ | .01—10 | .02—5 |
| $Al_2O_3/SiO_2$ | 0—1.0 | 0—.5 |

wherein $R_2O$ is the oxide form of an organic compound of an element of Group VB of the Periodic Chart and can be a compound containing one ethyl group, M is an alkali or alkaline earth metal, and maintaining the mixture, at crystallization temperatures, until crystals of the zeolite are formed. When prepared without alumina, any alumina that may be found in the product is introduced as an impurity in some other component of the crystallization medium. A material prepared without added alumina and with no aluminum present as an impurity would have no ion-exchange capability, since it contained no aluminum. Such substance would be considered a "zeolite" for the purposes of this disclosure.

In preparing zeolite ZSM-39 the preferred alkali metal oxide is sodium and the preferred source of $R_2O$ is tetraethylammonium (TEA) ions or n-propylamine, with, preferably, tetramethylammonium ions added in varying amounts to the reaction mixture.

Crystallization is performed in the temperature range from 93°C (200°F) to 204°C (400°F) generally, but at lower temperatures e.g. less than 93°C (200°F), crystallization time is longer. These times vary from about 6 hrs to 90 days. Thereafter, the crystals are separated from the liquid and recovered. The composition can be prepared utilizing materials which supply the appropriate oxide. Such compositions include sodium silicate, silica hydrosol, silica gel, silicic acid and sodium hydroxide. The organic compounds can be any element of Group VB such as nitrogen, phosphorus, arsenic, antimony. The preferred compounds are quaternary compounds generally expressed by the formula $R_4L+$ wherein L is an element of Group VB of the Periodic Chart, and each R is an alkyl or aryl group having between 1 and 7 (preferably 2—5) carbon atoms, preferably at least one R group is an ethyl group. While normally each alkyl or aryl group will be the same, it is not necessary that each group have the same number of carbon atoms in the chain. In preparing an ammonium species, the organic substituted ammonium chloride or hydroxide is useful. In preparing the phosphonium species of the zeolite, tetraethylphosphonium chloride is particularly desirable as a means of incorporating the quaternary metal compound in the zeolite. The other elements of Group VB behave similarly and thus zeolites containing the same can be prepared by the same manipulative procedure substituting the other Group VB metal for phosphorous. It should be realized that the oxide can be supplied from more than one source. The reaction mixture can be prepared either batchwise or continuously. Crystal size and crystallization time of the new zeolite composition will vary with the nature of the reaction mixture employed and the crystallization conditions.

The quaternary compounds need not be used as such. They may be produced in situ by the addition of the appropriate precursors. These precursors comprise a compound characterized by the formula $R_1R_2R_3L$ where $R_1$, $R_2$ and $R_3$ are selected from alkyl, substituted alkyl, aryl, substituted aryl, cycloalkyl, substituted cycloalkyl and hydrogen and L is an element of Group VB and a compound of the formula $R_4L$ where $R_4$ is alkyl, substituted alkyl, cycloalkyl, substituted cycloalkyl, aryl and substituted aryl and L is an electronegative group. According to a special embodiment of the invention, the method of the invention can be practised using the compound $R_1R_2R_3L$ alone. Thus, in specific embodiments one may use as the source of $R_2O$, amines or phosphines either primary, secondary or tertiary as well as diamines without addition of any $R_4X$.

The zeolite may be formed in a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the zeolite can be extruded before drying or dried or partially dried and then extruded.

In the case of many catalysts it is desirable to composite a zeolite with another material resistant to the temperatures and other conditions employed in organic conversion processes. ZSM-39 may thus be composited with a matrix of the kind and quantity described in our European specification 1695.

Employing a catalytically active form of ZSM-39 associated with a hydrogenation component, heavy petroleum residual stocks, cycle stocks, and other hydrocrackable charge stocks can be hydrocracked at temperatures between 204°C (400°F) and 441°C (825°F) using molar ratios of hydrogen to hydrocarbon charge in the range between 2 and 80. The pressure employed will vary between 170 and 17338 kPa (10 and 2,500 psig) and the liquid hourly space velocity between 0.1 and 10.

A catalytically active form of ZSM-39 can be employed for catalytic cracking, hydrocarbon cracking stocks can be cracked at a liquid hourly space velocity between about 0.5 and 50, a temperature between about 288°C (550°F) and 593°C (1100°F), a pressure between about subatmospheric and several hundred atmospheres.

Employing a catalytically active form of ZSM-39 associated with a hydrogenation component, reforming stocks can be reformed employing a temperature between 371°C (700°F) and 538°C (1000°F). The pressure can be between 791 and 6996 kPa (100 and 1000 psig) but is preferably between 1480 and 4928 kPa (200 and 700 psig). The liquid hourly space velocity is generally between 0.1 and 10, preferably between 0.4 and 4 and the hydrogen to hydrocarbon mole ratio is generally between 1 and 20 preferably between 4 and 12.

A catalytically active form of the zeolite of this invention can also be used for hydroisomerization of normal paraffins, when provided with a hydrogenation component, e.g., platinum. Hydroisomerization is carried out at a temperature between 93°C (200°F) and 371°C (700°F), preferably 149°C (300°F) to 288°C (550°F), with a liquid hourly space velocity between 0.01 and 2, preferably between 0.25 and 0.50 employing hydrogen such that the hydrogen to hydrocarbon mole ratio is between 1:1 and 5:1. Additionally, the catalyst can be used for olefin isomerization employing temperatures between −1°C (30°F) and 371°C (700°F).

Other reactions which can be accomplished employing a catalytically active form of ZSM-39 with or without a metal, e.g., platinum, include hydrogenation-dehydrogenation reactions and desulfurization reactions, olefin polymerization (oligomerization), aromatics alkylation, aromatics isomerization, disproportionation, transalkylation, and other organic compound conversion such as the conversion of alcohols (e.g. methanol to hydrocarbon).

In the examples which follow whenever adsorption data are set forth for comparison of sorptive capacities for water, cyclohexane and n-hexane, they were determined as follows:

A weighed sample of the calcined zeolite was contacted with the desired pure adsorbate vapor in an adsorption chamber, evacuated to 1 mm and contacted with 12 mm Hg of water vapor and 20 mm Hg of cyclohexane and n-hexane vapor, pressures less than the vapor-liquid equilibrium pressure of the respective adsorbate at room temperature. The pressure was kept constant (within about ±0.5 mm) by addition of adsorbate vapor controlled by a manostat during the adsorption period which did not exceed about eight hours. As the adsorbate was adsorbed by the zeolite the decrease in pressure caused the manostat to open a valve which admitted more adsorbate vapor to the chamber to restore the above control pressures. Sorption was complete when the pressure change was not sufficient to activate the manostat. The increase in weight as calculated as the adsorption capacity of the sample in g/100g of calcined adsorbent.

Examples 1 and 2

A starting gel mixture was prepared from colloidal silica (30% $SiO_2$), tetraethylammonium hydroxide (40%), tetramethylammonium hydroxide (25%), sodium aluminate and water. In Example 1, crystallization was achieved with stirring at 320°F for 70 hours. In Example 2, crystallization was conducted without agitation at 154°C (310°F) for 330 hours. After crystallization, the solids were separated from any unreacted components by filtration and then water washed followed by drying at 110°C (230°F). The amounts of starting materials, identification of same and product compositions are listed in Table 2.

Examples 3 and 4

A starting gel reaction mixture was prepared from sodium silicate (28.8% $SiO_2$, 8.9% $Na_2O$, 62% $H_2O$), obtained commercially as "Q-brand", tetramethylammonium chloride (50%), n-propylamine, sulfuric acid and water. In Example 3, crystallization was achieved with stirring at 160°C (320°F) for 53 hours. In Example 4, crystallization was attained without agitation at 160°C (320°F) for 48 hours. After crystallization, the solids were separated from any unreacted components by filtration and then water washed followed by drying at 110°C (230°F). The amounts of starting materials, identification of same product composition and adsorption data are set forth in Table 2 herein. The X-ray diffraction pattern of the zeolite produced according to the procedures of Example 4 is set forth in Table 3.

Example 5

The dried product of Example 4 was calcined for 3 hours at 538°C (1000°F) in following nitrogen. The calcined product was then ion exchanged twice with a large excess of 0.1 N NaCl—0.1 N NaOH solution for two hours at room temperature. The resultant washed product had a sodium content of 0.21 wt.%. The X-ray diffraction of the resultant zeolite product of this Example is given in Table 4.

TABLE 2

| Composition of charge | Example 1 | Example 2 | Example 3 | Example 4 |
|---|---|---|---|---|
| Q-Brand, g | — | — | 430 | 1718 |
| Coll. Silica, g. (30% $SiO_2$) | 400 | 100 | — | — |
| $H_2SO_4$ | — | — | 43 | 172 |
| $NaAlO_2$, g. | 0.5 | — | — | — |
| $H_2O$ | 150 | — | 2000 | 8300 |
| TEAOH (40%), g. | 250 | 100 | — | — |
| TMAOH (25%), g. | 40 | 10 | — | — |
| TMACl (50%), g. | — | — | 150 | 600 |
| Propylamine, g. | — | — | 150 | 800 |
| Cryst. Condition Temp., °C (°F) | 160 (320) | 154 (310) | 160 (320) | 160 (320) |
| Time, Hr. | 70 | 330 | 53 | 48 |
| Agitation | Yes | No | Yes | Yes |
| Crystallinity | ZSM-39 +ZSM-5 | ZSM-39 | ZSM-12+ ZSM-39 | ZSM-39 |

TABLE 2 (Continued)

| Product Composition, wt. % | Example 1 | Example 2 | Example 3 | Example 4 |
|---|---|---|---|---|
| $SiO_2$ | 80.1 | — | 96.5 | 89.0 |
| $Al_2O_3$ | 0.23 | — | 0.20 | 0.23 |
| Na | 0.17 | — | 0.28 | 0.23 |
| N | 1.2 | — | 0.83 | 0.78 |
| C | 11.0 | — | 3.0 | 3.66 |
| Ash | 81.0 | — | 96.5 | 93.8 |
| Molar Ratio $SiO_2/Al_2O_3$ | 590 | — | 819 | 657 |
| Sorptive Properties $H_2O$, % | — | — | — | 0.4 |
| $CyC_6$, % | — | — | — | 0.3 |
| n—$C_6$, % | — | — | — | 0.2 |

TABLE 3
X-ray diffraction data of as-synthesized ZSM-39

| (Degrees) | Interplanar spacing angstroms | Relative intensity |
|---|---|---|
| 7.93 | 11.15 | 5 |
| 12.95 | 6.84 | 23 |
| 13.72 | 6.45 | 2 |
| 14.35 | 6.17 | 1 |
| 15.21 | 5.83 | 93 |
| 15.88 | 5.58 | 69 |
| 16.58 | 5.35 | 1 |
| 18.37 | 4.83 | 47 |
| 20.03 | 4.43 | 36 |
| 21.20 | 4.19 | 2 |
| 21.55 | 4.12 | 1 |
| 22.51 | 3.95 | 48 |
| 22.87 | 3.89 | 2 |
| 23.08 | 3.85 | 2 |
| 23.90 | 3.72 | 100 |
| 24.55 | 3.63 | 1 |
| 26.04 | 3.42 | 42 |
| 27.25 | 3.27 | 84 |
| 27.63 | 3.23 | 10 |
| 29.16 | 3.06 | 12 |
| 30.26 | 2.954 | 8 |
| 33.05 | 2.710 | 2 |
| 35.63 | 2.520 | 9 |
| 37.15 | 2.420 | 1 |
| 38.05 | 2.365 | 10 |
| 39.51 | 2.281 | 17 |
| 40.34 | 2.236 | 3 |
| 40.64 | 2.220 | 1 |
| 41.70 | 2.166 | 3 |

TABLE 3 (contd.)
X-ray diffraction data of as-synthesized ZSM-39

| (Degrees) | Interplanar spacing angstroms | Relative intensity |
|---|---|---|
| 42.53 | 2.126 | 1 |
| 45.96 | 1.975 | 3 |
| 46.67 | 1.946 | 4 |
| 47.91 | 1.899 | 2 |
| 48.88 | 1.863 | 10 |
| 50.55 | 1.806 | 6 |
| 51.72 | 1.767 | 5 |
| 52.44 | 1.745 | 1 |
| 54.24 | 1.691 | 3 |
| 54.47 | 1.685 | 4 |
| 55.35 | 1.660 | 5 |
| 56.02 | 1.642 | 2 |
| 57.10 | 1.613 | 5 |
| 57.72 | 1.597 | 8 |
| 58.80 | 1.570 | 10 |
| 59.44 | 1.555 | 5 |

TABLE 4
X-Ray diffraction data of NA-exchanged ZSM-39

| (Degrees) | Interplanar spacing angstroms | Relative intensity |
|---|---|---|
| 7.92 | 11.16 | 5 |
| 12.98 | 6.82 | 32 |
| 13.70 | 6.46 | 1 |
| 14.39 | 6.16 | 1 |
| 15.23 | 5.82 | 100 |
| 15.93 | 5.56 | 87 |
| 18.30 | 4.85 | 14 |
| 18.41 | 4.82 | 38 |
| 20.04 | 4.43 | 38 |

*Intensity enhanced by crystalline silica phases

TABLE 4 (Continued)
X-Ray diffraction data of NA-exchanged ZSM-39

| (Degrees) | Interplanar spacing angstroms | Relative intensity |
|---|---|---|
| 20.58 | 4.32 | 6* |
| 21.95 | 4.05 | 56* |
| 22.55 | 3.94 | 38 |
| 23.93 | 3.72 | 85 |
| 24.55 | 3.63 | 1 |
| 26.08 | 3.42 | 41 |
| 27.32 | 3.26 | 75 |
| 27.69 | 3.22 | 8 |
| 28.40 | 3.14 | 4* |
| 29.10 | 3.07 | 7 |
| 29.29 | 3.05 | 12 |
| 30.35 | 2.945 | 9 |
| 30.75 | 2.908 | 5* |
| 31.40 | 2.849 | 4* |
| 23.18 | 2.700 | 3 |
| 34.78 | 2.579 | 1 |
| 35.70 | 2.515 | 11 |
| 36.08 | 2.489 | 8* |
| 36.95 | 2.433 | 1 |
| 37.95 | 2.371 | 2 |
| 38.13 | 2.360 | 10 |
| 38.38 | 2.345 | 1 |
| 39.35 | 2.290 | 1 |
| 39.62 | 2.275 | 14 |
| 40.27 | 2.239 | 1 |
| 40.38 | 2.234 | 6 |
| 40.51 | 2.227 | 1 |
| 41.60 | 2.171 | 1 |
| 41.90 | 2.156 | 3 |

*Intensity enhanced by crystalline silica phases

TABLE 4 (Continued)
X-Ray diffraction data of NA-exchanged ZSM-39

| (Degrees) | Interplanar spacing angstroms | Relative intensity |
|---|---|---|
| 42.60 | 2.122 | 2 |
| 42.92 | 2.107 | 1 |
| 44.60 | 2.032 | 1 |
| 44.82 | 2.022 | 2 |
| 45.86 | 1.979 | 1 |
| 46.10 | 1.969 | 2 |
| 46.67 | 1.946 | 2 |
| 46.86 | 1.939 | 4 |
| 47.86 | 1.901 | 1 |
| 47.96 | 1.897 | 1 |
| 48.13 | 1.891 | 2 |
| 48.50 | 1.877 | 2 |
| 48.70 | 1.870 | 2 |
| 48.93 | 1.861 | 2 |
| 49.06 | 1.857 | 4 |
| 50.44 | 1.809 | 3 |
| 50.74 | 1.799 | 5 |
| 51.55 | 1.773 | 2 |
| 51.97 | 1.760 | 4 |
| 52.50 | 1.743 | 1 |
| 54.14 | 1.694 | 2 |
| 54.28 | 1.690 | 2 |
| 54.43 | 1.686 | 4 |
| 54.61 | 1.681 | 1 |
| 55.48 | 1.656 | 2 |
| 55.55 | 1.654 | 2 |
| 55.93 | 1.644 | 1 |
| 56.05 | 1.641 | 2 |
| 56.20 | 1.637 | 2 |
| 56.30 | 1.634 | 1 |

TABLE 4 (Continued)
X-Ray diffraction data of NA-exchanged ZSM-39

| (Degrees) | Interplanar spacing angstroms | Relative intensity |
|---|---|---|
| 57.05 | 1.614 | 4 |
| 57.26 | 1.609 | 4 |
| 57.40 | 1.605 | 2 |
| 57.87 | 1.593 | 2 |
| 58.00 | 1.590 | 4 |
| 58.63 | 1.575 | 2 |
| 59.03 | 1.565 | 4 |
| 59.49 | 1.554 | 1 |
| 59.63 | 1.550 | 4 |

**Claims**

1. A crystalline zeolitic material having a lattice comprising $SiO_4$ tetrahedra crosslinked by the sharing of oxygen atoms and characterized by the following interplanar spacings: (1Å=0.1 nm)

| Interplanar spacing D (A) | Relative intensity |
|---|---|
| 11.2±0.2 | W |
| 6.8±0.15 | M |
| 5.8±0.1 | VS |
| 5.6±0.1 | VS |
| 4.8±0.1 | M |
| 4.4±0.1 | M |
| 3.95±0.08 | M—S |
| 3.7±0.08 | VS |
| 3.4±0.07 | M—S |
| 3.3±0.07 | VS |
| 3.2±0.07 | W |
| 3.1±0.06 | W |
| 3.0±0.06 | W |
| 2.3±0.05 | W |

2. A crystalline zeolitic material according to claim 1 the lattice of which also comprises $AlO_4$ tetrahedra.

3. A crystalline zeolitic material according to claim 1 or claim 2 which has the formula, in terms of mole ratios:

$$(0\text{—}2.5)M_{2/n}O:(0\text{—}2.5)Al_2O_3:100\ SiO_2$$

in which M is at least one cation of valence n.

4. A crystalline zeolitic material according to any preceding claim which has the formula, in terms of mole ratios:

$$(0\text{—}2.5)R_2O:(0\text{—}2.5)M_{2/n}O:(0\text{—}2.5)Al_2O_3:100\ SiO_2$$

in which $R_2O$ is the oxide representation of an organic compound containing an element of Group VB of the periodic Table which compound comprises an alkyl or aryl group having from 1 to 7 carbon atoms at least one such group being ethyl.

5. A crystalline zeolitic material according to claim 4 wherein $R_2O$ represents a tetraethylammonium compound and M is sodium or potassium.

6. A crystalline zeolite according to any of claims 1 to 4 which contains hydrogen, ammonium or rare earth cations.

7. A crystalline zeolitic material according to any of claims 1 and 3 to 6 wherein substantially no alumina is present.

8. A method for preparing the crystalline zeolitic material claimed in claim 1 which comprises preparing a reaction mixture containing a source of a silica, optionally a source of alumina, an alkali metal oxide, $R_2O$ and water and having a composition, in terms of mole ratios of oxides, falling within the following ranges:

$Al_2O_3/SiO_2=0$ to 1.0
$M_{2/n}O/SiO_2=0.01$ to 10
$R_2O/SiO_2=0.01$ to 100

wherein R is as previously defined and M is an alkali or alkaline earth metal, and maintaining said mixture until crystals are formed.

9. A method according to Claim 8 wherein said reaction mixture has the composition:

$Al_2O_3/SiO_2=0$ to 0.5
$M_{2/n}O/SiO_2=0.02$ to 5
$R_2O/SiO_2=0.05$ to 20

10. A method according to Claim 8 wherein said $R_2O$ is the oxide form of a quaternary compound of an element of said Group VB of the Periodic Chart, said organic compound being an alkyl or aryl group having between 1 and 7 carbon atoms.

11. A method according to Claim 10 wherein said alkyl group further comprises a tetraethyl radical.

12. A method according to Claim 11 wherein said radical further comprises tetraethylammonium.

13. A method according to Claim 11 wherein said radical further comprises tetraethylphosphonium.

14. A method according to Claim 12 wherein said quaternary compound is tetraethylammonium hydroxide.

15. A method according to Claim 13 wherein said quaternary compound is tetraethylphosphonium chloride.

16. A method according to Claim 9 wherein said alkali metal oxide is sodium oxide.

17. A method according to any of Claims 8 to 16 source of tetramethylammonium ion is added to said reaction mixture.

18. A method according to Claim 10 wherein said $R_2O$ is the oxide form of propylamine.

19. A method of converting an organic charge which comprises contacting said charge under conversion conditions with a catalyst comprising a zeolite as claimed in any of claims 1 to 7.

**Patentansprüche**

1. Ein kristallines zeolithisches Material mit einem Gitter mit $SiO_4$-Tetraedern, die durch gemeinsame Sauerstoffatome vernetzt sind und das durch die folgenden Netzebenenabstände charakterisiert ist: (1Å=0,1 nm)

| Netzebenenabstand D (A) | Relative Intensität |
|---|---|
| 11.2±0.2 | W |
| 6.8±0.15 | M |
| 5.8±0.1 | VS |
| 5.6±0.1 | VS |
| 4.8±0.1 | M |
| 4.4±0.1 | M |
| 3.95±0.08 | M—S |
| 3.7±0.08 | VS |
| 3.4±0.07 | M—S |
| 3.3±0.07 | VS |
| 3.2±0.07 | W |
| 3.1±0.06 | W |
| 3.0±0.06 | W |
| 2.3±0.05 | W |

2. Kristallines zeolithisches Material nach Anspruch 1, dessen Gitter auch $AlO_4$-Tetraeder umfaßt.

3. Kristallines zeolithisches Material nach Anspruch 1 oder Anspruch 2, das, ausgedrückt als Mol-Verhältnisse, die Formal aufweist:

$$(0\text{—}2{,}5)M_{2/n}0:(0\text{—}2{,}5)Al_2O_3:100\ siO_2$$

in der M wenigstens ein Kation der Valenz n ist.

4. Kristallines zeolithisches Material nach irgendeinem vorausgehenden Anspruch, das, ausgedrückt in Mol-Verhältnissen, die Formel aufweist:

$$(0\text{—}2{,}5)R_2O:(0\text{—}2{,}5)M_{2/n}O:(0\text{—}2{,}5)Al_2O_3:100\ SiO_2$$

in der $R_2O$ die Oxid-Darstellung einer organischen Verbindung ist, die ein Element der Gruppe VB des Periodensystems enthält, wobei diese Verbindung eine Alkyl- oder Aryl-Gruppe mit von 1 bis 7 Kohlenstoffatomen aufweist, wobei wenigstens eine derartige Gruppe Ethyl ist.

5. Kristallines zeolithisches Material nach Anspruch 4, bei dem $R_2O$ eine Tetraethylammoniumverbindung darstellt und M Natrium oder Kalium ist.

6. Ein kristalliner Zeolith nach irgendeinem der Ansprüche 1 bis 4, der Wasserstoff-, Ammonium- oder Seltenerd-Kationen enthält.

7. Kristallines zeolithisches Material nach irgendeinem der Ansprüche 1 und 3 bis 6, bei dem im wesentlichen kein Aluminiumoxid vorhanden ist.

8. Verfahren zur Herstellung des kristallinen zeolithischen Materials, das in Anspruch 1 beansprucht wird, das die Bereitung einer Reaktionsmischung, die eine Quelle für ein Siliciumoxid, gegebenenfalls eine Quelle für Aluminiumoxid, ein Alkalimetalloxid, $R_2O$ und Wasser enthält und eine Zusammensetzung aufweist, die, ausgedrückt in Mol-Verhältnissen von Oxiden, in die folgenden Bereiche fällt:

$Al_2O_3/SiO_2$=0 bis 1,0
$M_{2/n}O/SiO_2$=0,01 bis 10
$R_2O/SiO_2$=0,01 bis 100

worin R wie vorausgehend definiert ist und M ein Alkali- oder Erdalkali-Metall ist, und das Halten dieser Mischung umfaßt, bis Kristalle gebildet sind.

9. Verfahren nach Anspruch 8, bei dem die genannte Reaktionsmischung die Zusammensetzung aufweist:

$Al_2O_3/SiO_2$=0 bis 0,5
$M_{2/n}O/SiO_2$=0,02 bis 5
$R_2O/SiO_2$=0,05 bis 20.

10. Verfahren nach Anspruch 8, bei dem das genannte $R_2O$ die Oxidform einer quaternären Verbindung eines Elements der genannten Gruppe VB des Periodensystems ist, wobei die genannte organische Verbindung eine Alkyl- oder Aryl-Gruppe mit zwischen 1 und 7 Kohlenstoffatomen ist.

11. Verfahren nach Anspruch 10, bei dem die genannte Alkyl-Gruppe genauer einen Tetraethyl-Rest umfaßt.

12. Verfahren nach Anspruch 11, bei dem der genannte Rest genauer Tetraethylammonium umfaßt.

13. Verfahren nach Anspruch 11, bei dem der genannte Rest genauer Tetraethylphosphonium umfaßt.

14. Verfahren nach Anspruch 12, bei dem die genannnte quaternäre Verbindung Tetraethylammoniumhydroxid ist.

15. Verfahren nach Anspruch 13, bei dem die genannte quaternäre Verbindung Tetraethylphosphoniumchlorid ist.

16. Verfahren nach Anspruch 9, bei dem das genannte Alkalimetall-Oxid Natriumoxid ist.

17. Verfahren nach irgendeinem der Ansprüche 8 bis 16, bei dem eine Quelle für das Tetramethylammonium der genannten Reaktionsmischung zugesetzt wird.

18. Verfahren nach Anspruch 10, bei dem das genannte $R_2O$ die Oxidform von Propylamin ist.

19. Verfahren zur Umwandlung eines organischen Einsatzes, das das Kontaktieren des genannten Einsatzes unter Umwandlungsbedingungen mit einem Katalysator umfaßt, der einen Zeolithen umfaßt, wie er in irgendeinem der Ansprüche 1 bis 7 beansprucht wird.

## Revendications

1. Une zéolite cristalline ayant un réseau comprenant des tétraèdres $SiO_4$ réticulés par la mise en commun d'atomes d'oxygène et caractérisée par les distances suivantes entre les plans réticulaires (1Å=0,1 nm).

| Distance entre plans d (Å) | Intensité relative |
|---|---|
| 11,2±0,2 | faible |
| 6,8±0,15 | moyenne |
| 5,8±0,1 | très forte |
| 5,6±0,1 | très forte |
| 4,8±0,1 | moyenne |
| 4,4±0,1 | moyenne |
| 3,95±0,08 | moyenne—forte |
| 3,7±0,08 | très forte |
| 3,4±0,07 | moyenne—forte |
| 3,3±0,07 | très forte |
| 3,2±0,07 | faible |
| 3,1±0,06 | faible |
| 3,0±0,06 | faible |
| 2,3±0,05 | faible |

2. Une zéolite cristalline selon la revendication 1, dont le réseau contient également des tétraèdres $AlO_4$.

3. Une zéolite cristalline selon la revendication 1 ou 2, qui répond à la formule suivante, en rapports molaires:

$$(0\text{—}2{,}5)M_{2/n}O:(0\text{—}2{,}5)Al_2O_3:100\ SiO_2$$

dans laquelle M est au moins un cation de valence n.

4. Une zéolite cristalline selon l'une quelconque des revendications précédentes qui a la formule suivante, exprimée en rapports molaires:

$(0—2,5)R_2O:(0—2,5)M_{2/n}O:(0—2,5)Al_2O_3:100\ SiO_2$

dans laquelle $R_2O$ représente la forme oxyde un composé organique contenant un élément du groupe VB de la classification périodique, ce composé comprenant un groupe alkyle ou aryle ayant de 1 à 7 atomes de carbone, dont l'un au moins est un groupe éthyle.

5. Une zéolite cristalline selon la revendication 4, dans laquelle $R_2O$ représente un composé de tétraéthylammonium et M est le sodium ou le potassium.

6. Une zéolite cristalline selon l'une quelconque des revendications 1 à 4, qui contient des cations hydrogène, des cations ammonium ou des cations des terres rares.

7. Une zéolites cristalline selon l'une quelconque des revendications 1 et 3 à 6, dans laquelle il n'y a sensiblement pas d'alumine.

8. Un procédé pour préparer la zéolite cristalline selon la revendication 1, qui consiste à préparer un mélange de réaction contenant une source de silice, facultativement un source d'alumine, un oxyde de métal alcalin, $R_2O$ et de l'eau et ayant une composition, exprimée en rapports molaires d'oxydes, située dans les gammes suivantes:

$Al_2O_3/SiO_2=0$ à 1,0
$M_{2/n}O/SiO_2=0,01$ à 10
$R_2O/SiO_2=0,01$ à 100

dans laquelle R est comme défini précédemment et M est un métal alcalin ou alcalino-terreux, et à maintenir ledit mélange jusqu'à ce que des cristaux soient formés.

9. Un procédé selon la revendication 8, dans lequel ledit mélange de réaction a la composition suivante;

$Al_2O_3/SiO_2=0$ à 0,5
$M_{2/n}O/SiO_2=0,02$ à 5
$R_2O/SiO_2=0,05$ à 20

10. Un procédé selon la revendication 8, dans lequel ledit $R_2O$ est la forme oxyde d'un composé quaternaire d'un élément dudit groupe VB de la classification périodique, ledit composé organique étant un groupe alkyle ou aryle ayant entre 1 et 7 atomes de carbone.

11. Un procédé selon la revendication 10, dans lequel ledit groupe alkyle comprend en outre un radical tétraéthyle.

12. Un procédé selon la revendication 11, dans lequel ledit radical comprend en outre un groupe tétraéthylammonium.

13. Un procédé selon la revendication 11, dans lequel ledit radical comprend en outre un groupe tétraéthylphosphonium.

14. Un procédé selon la revendication 12, dans lequel ledit composé quaternaire est l'hydroxyde de tétraéthylammonium.

15. Un procédé selon la revendication 13, dans lequel ledit composé quaternaire est le chlorure de tétraéthylphosphonium.

16. Un procédé selon la revendication 9, dans lequel ledit oxyde de métal alcalin est l'oxyde de sodium.

17. Un procédé selon l'une quelconque des revendications 8 à 16, une source d'ions tétraméthylammonium est ajoutée audit mélange de réaction.

18. Un procédé selon la revendication 10, dans lequel ledit $R_2O$ est la forme oxyde de la propylamine.

19. Un procédé de conversion d'une charge organique, qui consiste à mettre en contact ladite charge dans des conditions de conversion avec un catalyseur comprenant une zéolite telle que revendiquée dans l'une quelconque des revendications 1 à 7.